# EUROPEAN PATENT SPECIFICATION

(11) **EP 3 017 631 B1**
(45) Date of publication and mention of the grant of the patent: **22.05.2019**
(21) Application number: 13734122.8
(22) Date of filing: 05.07.2013
(51) Int. Cl.: H04W 48/08, H04W 48/18, H04W 8/18

(54) **CONNECTING TO RADIO ACCESS NETWORKS SELECTED BASED ON CHARGING DATA FOR A SUBSCRIPTION OF A USER**
VERBINDUNG MIT FUNKZUGANGSNETZEN, WELCHE GEMÄSS VERRECHNUNGSDATEN FÜR DAS ABONNEMENT EINES BENUTZERS AUSGEWÄHLT WERDEN
CONNEXION À DES RÉSEAUX D'ACCÈS RADIO SÉLECTIONNÉS SELON DES DONNÉES DE FACTURATION POUR UN ABONNEMENT D'UN UTILISATEUR

(43) Date of publication of application: 11.05.2016
(73) Proprietor: Telefonaktiebolaget LM Ericsson (publ), 164 83 Stockholm (SE)
(72) Inventor: ZEE, Oscar, S-118 67 Stockholm (SE); VIKBERG, Jari Tapio, S-153 38 Järna (SE)
(74) Representative: Zacco Sweden AB
(86) International application number: PCT/EP2013/064319
(87) International publication number: WO 2015/000533

(56) References cited:
- WO-A1-99/16267
- WO-A1-2006/062354
- US-A1- 2009 154 423
- US-A1- 2012 059 748
- US-A1- 2012 281 674

## Description

### Technical Field

The invention relates to methods and apparatus for connecting a user equipment (UE) to at least one of a plurality of radio access.

### Background

With the proliferation of devices that have both Wireless Fidelity (Wi-Fi) and 3rd Generation Partnership Project (3GPP) mobile broadband support, offloading cellular network traffic from a 3GPP network to a Wi-Fi network is becoming increasingly interesting, both from a user's and an operator's perspective. This type of offloading may be termed "traffic steering".

Offloading traffic from a 3GPP network using Wi-Fi or wireless local area network (WLAN) (the two terms are used interchangeably throughout this document) is becoming more and more interesting and advantageous both from an operator's and an end user's point of view. Reasons for this include:
∘ **Additional frequency:** by using Wi-Fi, operators can get an additional 85MHz in the 2.4GHz band and almost another 500MHz in the 5GHz band.
∘ **Cost:** From an operator's point of view, Wi-Fi uses unlicensed frequency that is free of charge. On top of that, the cost of Wi-Fi Access Points (AP), both from capital expenditure and operational expenditure viewpoints, is considerably lower than that of a 3GPP base station. Operators can also take advantage of APs that are already deployed in "hotspots" such as train stations, airports, stadiums, shopping malls, etc. Most end users are also currently used to having Wi-Fi for free at home (as home broadband subscriptions are usually flat rate) and public places.
∘ **Terminal support:** Almost all UEs such as smartphones and other portable devices currently available in the market support Wi-Fi. In Wi-Fi terminology, the term "station" (STA) may be used instead of UE, and as such the terms UE, STA and terminal may be used interchangeably in this document
∘ **High data rate:** Under low interference conditions and assuming the user is close to the Wi-Fi AP, Wi-Fi can provide peak data rates that outshine that of current mobile networks (for example, theoretically up to 600Mbps for IEEE 802.11n deployments with Multiple Input Multiple Output (MIMO)).

For technical and historical reasons, a Wi-Fi deployment scenario is in many cases fundamentally different from a cellular deployment scenario. Special considerations have to be made when offloading traffic from 3GPP networks to Wi-Fi networks. In addition, management of traffic steering should make best use of network resources and user needs when deciding to which access network a UE should be connected.

Most current Wi-Fi deployments are totally separate from mobile networks and are to be seen as non-integrated. From a UE perspective, most mobile operating systems (OS) for UEs, such as Android and iOS, support a simple Wi-Fi offloading mechanism where UEs immediately switch all packet switched (PS) bearers to a Wi-Fi network upon detection of such a network with a certain signal level. The decision to offload to a Wi-Fi or not is referred to as "access selection strategy" and the aforementioned strategy of selecting Wi-Fi whenever such a network is detected can be known as "Wi-Fi-if-coverage".

However, current access selection strategies, such as the Wi-Fi-if-coverage strategy are overly simplistic and may not achieve the best access characteristics and/or access performance for a given UE.

WO 99/16267 A1 discloses a network based tariff acquisition system for roaming mobile subscribers. The method and system permits mobile subscribers to acquire tariff information in a visiting service area that allows them to be reasonably sure that they are accessing the most suitable provider. The process of the present invention is efficient, transparent and does not necessarily require involvement by the subscriber.

US 2012/281674 A1 discloses methods, systems and computer readable media for steering a subscriber between access networks. According to one aspect, a method for steering a subscriber between access networks includes, at a first policy and charging rules function (PCRF) that serves a first access network, identifying a subscriber of the first access network as a candidate for steering to a second access network that is served by a second PCRF, querying the second PCRF to determine whether the candidate subscriber is allowed access to the second access network, and, upon a determination that the candidate subscriber is allowed access to the second access network, steering the candidate subscriber to the second access network.

WO 2006/062354 A1 discloses an access network selection method using multi-criteria decision making in a mobile heterogeneous network. With such a system and method, a subscriber selectively accesses an access network having advantageous communication quality and cost according to transmission environment and service characteristics so that mobility capability is increased due to effective utilization of radio resources and traffic division of heterogenous access networks.

US 2012/059748 A1 discloses a system and method for adaptive billing. The method includes receiving one or more available network access plans from a network provider when a current usage of a client device has passed a usage threshold of a current network access plan, providing the available network access plans for selection by a user, receiving a selected network access plan from the user, and transmitting the selected network access plan to the network provider to increase usage of the client device according to the selected network access plan

### Summary

It is an object of the invention to alleviate some of the disadvantages with current systems for managing traffic steering between access networks and provide improved telecommunications terminals and/or nodes.

Aspects of the present invention are provided in the independent claims.

According to the invention in a first aspect, there is provided a user equipment for connecting to at least one of a plurality of radio access networks, as defined in Claim 1.

Optionally, the user equipment further comprises a user interface configured to present the selected at least one radio access network to a user, and to receive a user selection accepting or rejecting the selected at least one radio access network.

Optionally, the user equipment further comprises a user interface configured to present charging data for a user's subscription to a user, and to receive a user selection of one of the plurality of radio access networks.

Optionally, the receiver is configured to receive charging data for the subscription of a user from a node in a core network.

Optionally, the receiver is configured to receive charging data for the subscription of a user from a node at least partially undertaking an access network discovery and selection function.

Optionally, the receiver is configured to receive charging data for the subscription of a user over one or more of: an S14 interface; a user plane of one or more of the plurality of radio access networks; and a control plane of one or more of the plurality of radio access networks.

Optionally, the data relating to the selected radio access network comprises connection data to connect the user equipment to the selected radio access network.

Optionally, the data transmitted by the transmitter comprises user preference data identifying a plurality of radio access networks or one or more combinations of radio access networks, each having an associated condition for use.

Optionally, the user preference data comprises data relating to a plurality of radio access networks or one or more combinations of radio access networks, and an order in which each is preferred.

Optionally, the transmitter (502) is configured to transmit the data to one or more nodes that provide a radio access frequency and cell selection function.

Optionally, the data is transmitted over one or more of: an S14 interface via an access network discovery and selection function; a user plane of one or more of the plurality of radio access networks; and a control plane of one or more of the plurality of radio access networks.

According to the invention in a second aspect, there is provided a method of operating a user equipment for connecting to at least one of a plurality of radio access networks, as defined in Claim 5.

According to the invention in a third aspect, as defined in Claim 12, there is provided a non-transitory computer readable medium comprising computer readable code configured, when run on a user equipment, to carry out the method described above.

According to the invention in a fourth aspect, there is provided a radio access network node for at least partially connecting a user equipment to at least one of a plurality of radio access network, as defined in Claim 6.

Optionally, the radio access network node forms at least part of a radio access frequency and cell selection function.

Optionally, the receiver is configured to receive the charging data over a control plane and/or a user plane of one or more of the plurality of radio access networks.

Optionally, the receiver is configured to receive the charging data directly from a core network node.

Optionally, the receiver is configured to receive charging data relating to each of the plurality of radio access networks.

Optionally, the radio access network node further comprises a subscription amender configured to amend charging data relating to one or more of the plurality of radio access networks for traffic steering.

Optionally, charging data is amended at least partly based on network performance levels and/or network load.

Optionally, the receiver is configured to receive, from the user equipment, data identifying to a selected one or more radio access networks and the radio access network selector is configured to select one of the plurality of radio access networks based at least partly on the data received from the user equipment.

Optionally, the receiver is configured to receive data from the user equipment over an S14 interface via access network discovery and selection function.

According to the invention in a fifth aspect, there is provided a method of operating a radio access network node for at least partially connecting a user equipment to at least one of a plurality of radio access networks, as defined in Claim 9.

According to the invention in a sixth aspect, there is provided a telecommunications system for connecting a user equipment to at least one of a plurality of radio access networks, as defined in Claim 10.

According to the invention in a seventh aspect, there is provided a method of operating a telecommunications system for connecting a user equipment to at least one of a plurality of radio access networks, as defined in Claim 11.

### Brief description of drawings

Figures 1 and 2 are schematic representations of a telecommunications network;
Figure 3a is a schematic representation of a user plane of a Wi-Fi radio access network;
Figure 3b is a schematic representation of a control plane of a Wi-Fi radio access network;
Figure 4 is a schematic representation of a telecommunications network;
Figure 4a is a schematic representation of a telecommunications network;

Generally, disclosed herein are methods and apparatus for traffic steering via one or more of a plurality of radio access networks. The methods and apparatus disclosed take account of requirements of a user when deciding which radio access network to select. The user requirements may be based on information relating to a user's subscription to a telecommunications service, such as charging information, and/or information relating to network traffic. The methods and apparatus may allow a user, a UE and/or a function of one or more network nodes to make a selection for traffic steering based on that information.

To aid a full understanding of the methods and apparatus disclosed herein, fundamental technologies and methods of obtaining information relating to a subscription to a telecommunications service are discussed below.

### Overall E-UTRAN architecture

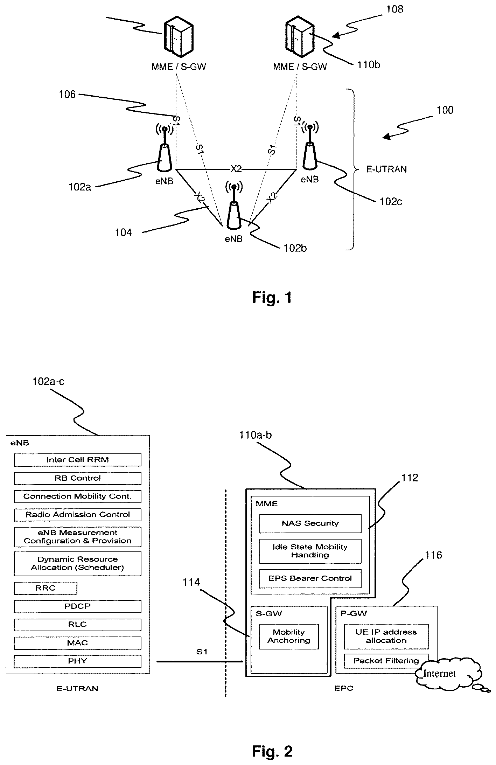

Referring to Figures 1 and 2, an Evolved Universal Mobile Telecommunications System (UMTS) Terrestrial Radio Access Network (E-UTRAN) 100 comprises base stations called enhanced NodeBs (eNBs or eNodeBs or eNode Bs) 102a-c. The eNBs 102a-c provide E-UTRAN user plane and control plane protocol terminations towards a UE and are part of a 3GPP radio access network (RAN). The eNBs 102a-c are interconnected with each other by means of an X2 interface 104. The eNBs 102a-c are also connected by means of an S1 interface 106 to an Evolved Packet Core (EPC) (core network) 108, more specifically to a Mobility Management Entity (MME) / Serving Gateway (S-GW) 110a-b of the EPC. An eNB 102a-c is connected to an MME 112 by means of an S1-MME interface and to an S-GW 114 by means of an S1-U interface. The S1 interface 106 supports many-to-many relation between MMEs 112, S-GWs 114 and eNBs 102a-c.

The eNBs 102a-c may host functionalities such as radio resource management, radio bearer control, admission control, header compression of user plane data towards the UE and routing of user plane data towards the serving gateway. The MME 112 is a control node that processes the signaling between the UE and the EPC, or core network 108. The main functions of the MME 112 are related to connection management and bearer management, which are handled via non access stratum (NAS) protocols. The S-GW 114 is an anchor point for UE mobility within 3GPP access networks. The S-GW 114 also includes other functionalities such as temporary downlink (DL) data buffering while the UE is being paged, packet routing and forwarding the traffic to the right eNB 102a-c. A Packet Data Network (PDN) Gateway (P-GW or PDN-GW) 116 (not shown in Figure 1) is a node responsible for UE Internet Protocol (IP) address allocation, as well as Quality of Service (QoS) enforcement, and gathering information for charging and lawful interception.

Figure 2 summarises the functionalities of different nodes of the telecommunications system 100. The reader is referred to 3GPP TS 23.401 and 3GPP TS 36.300 and the references contained therein for details of the functionalities of different nodes.

It is noted that the Figures 1 and 2 and the above description of an E-UTRAN architecture are exemplary and are included for reference only. The methods and apparatus disclosed herein may be used with other technologies, such as wideband code division multiple access (WCDMA) and global system for mobile communications (GSM).

### Charging in mobile telecommunications networks

Charging in mobile telecommunications networks is typically performed by one or more of the core network nodes and service network nodes comprising a telecommunications network. Charging can be divided into online charging and offline charging. Further, charging can be undertaken using policy and charging rules function (PCRF) and/or customised applications for mobile network enhanced logic (CAMEL).

General aspects of charging in mobile telecommunications networks are discussed herein, however, the reader is referred to 3GPP TS 32.240, 3GPP TS 23.401, 3GPP TS 23.060 and 3GPP TS 23.078 for further information.

One main principle for credit control session between a gateway general packet radio service (GPRS) support node (GGSN) (or a PDN-GW) and the online charging system (OCS) is as follows. The GGSN (or PDN-GW) initiates different types of credit control (CC) signalling towards the OCS at different actions like session request, service request and deletion of session. The GGSN (or PDN-GW) receives quota from the OCS and may need to request more quota when the current quota for an UE (or subscription) is starting to finish. The above is just an example and different other arrangements are also possible.

Another main principle for credit control session between a serving GPRS support node (SGSN) and a CAMEL service environment (CSE) through a CAMEL application part (CAP) interface is as follows. The SGSN initiates a detection point (DP) after packet data protocol (PDP) context activation or change of position context. The SGSN receives one or several apply charging GPRS signals from the CSE, containing different trigger condition in terms of e.g. time volume etc. Every time a trigger condition is fulfilled, an apply charging report GPRS will then be sent to the CSE for receiving further apply charging GPRS signals or the CSE will release the session. The above is just an example and different other arrangements are also possible.

### Wi-Fi architecture

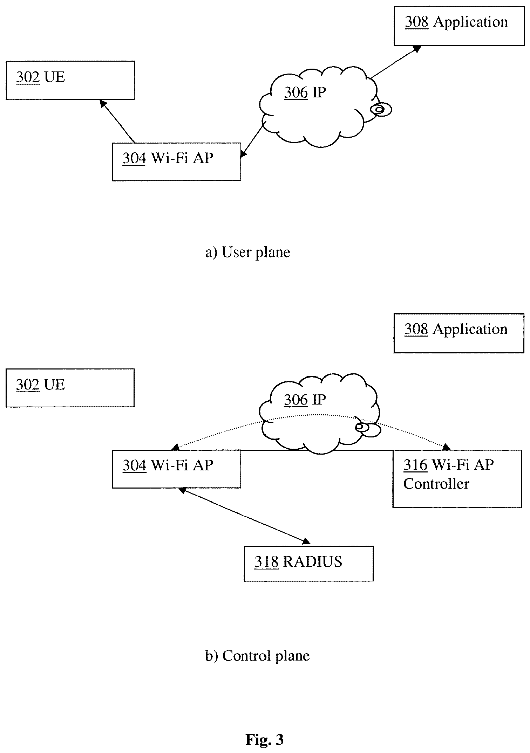

Figures 3a and 3b show a simplified example of a Wi-Fi architecture. Figure 3a shows a user plane and Figure 3b shows a control plane.

Referring to Figure 3a, a very lean architecture is employed in the user plane 300, wherein a UE/STA 302 is connected to an AP 304, which can be directly connected to a network 306, such as the Internet, and indirectly connected to an application 308. Referring to Figure 3b, in the control plane 310, an AP 312 is connected to a network 314, such as the Internet. A Wi-Fi access point controller (AC) 316 is connected to the network 314 and handles the management of the AP 312. One AC typically handles the management of several APs 312. Security and/or authentication of users is handled via an authentication, authorization and accounting (AAA) entity, which is commonly provided by a remote administration dial in user service (RADIUS) 318.

### Wi-Fi/3GPP Integration mechanisms

A number of integrations mechanisms exist for integrating Wi-Fi and 3GPP. It is noted once again that other radio access networks may be used, but the specific case of 3GPP and Wi-Fi is discussed in detail herein.

### Common Authentication

The idea behind common authentication is automatic subscriber identity module (SIM) based authentication in both radio access networks (3GPP and Wi-Fi, in this case). Extensible authentication protocol (EAP) is an authentication framework that provides support for the different authentication methods. Described by request for comment (RFC) 3748 and later updated by RFC 5247, this protocol is carried directly over the data-link layer (DLL) and is currently widely deployed in WLANs. The EAP framework specifies over 40 different methods for authentication, and EAP-SIM, EAP authentication and key agreement (AKA) and EAP-AKA' are the ones that are becoming widely available in UEs and networks. A benefit of common authentication is that the user does not necessarily have to be actively involved in the authentication process which will increase the chances of more traffic being steered to the Wi-Fi side, and paves the way for network centric control.

### User plane (core network) integration

Wi-Fi user plane integration provides a mobile operator an opportunity to provide the same services, like parental control and subscription based payment methods, for the end users when connected both via 3GPP and via Wi-Fi. The solutions also include the possibility to offload parts of the user plane from the mobile core so that not all traffic needs to be brought to the mobile core network.

Different solutions are being standardized in 3GPP. Overlay solutions (S2b, S2c) are specified since 3GPP TS 23.402 Rel-8 while integration solutions (S2a) are currently works in progress. S2a, S2b and S2c indicate the 3GPP interface/reference point name towards the PDN-GW.

### RAN level integration

A further level of integration can be realized via access selection based on RAN information on both 3GPP and Wi-Fi radio access networks, in addition to the common authentication and user plane integration methods discussed above.

A function known as a Radio Access, Frequency and Cell (RAFC) selection function is introduced that can be used as an information sharing point for the Wi-Fi and 3GPP networks. The "RAFC" function can be implemented as a separate node or it can be distributed as part of any of the existing nodes in the 3GPP or Wi-Fi radio access networks. It can also be implemented either as a centralized function in one node or as a function distributed to multiple nodes.

Traffic steering can be performed by considering the situation at each radio access network. Using such an abstraction, even legacy UEs could be able to benefit from Wi-Fi integration. For example, consider a legacy UE that is already connected to a 3GPP network, and is employing "Wi-Fi-if-coverage" (i.e. Wi-Fi is selected whenever it is detected by the UE) access selection mechanism as described above. When the legacy UE tries to connect to the Wi-Fi network, the AP and/or AC can connect to the RAFC to request information about the current user's Quality of Service (QoS) in the 3GPP network. If it is found that the user's QoS would be degraded if connection is switched to the Wi-Fi RAN, a rejection can be sent to the UE from the Wi-Fi RAN in order to keep it connected to the 3GPP RAN. Functionality can also be added between the Wi-Fi RAN and the 3GPP networks to assist in finding the correct serving RAN node and the related RAFC when a legacy UE attempts to access Wi-Fi. A tighter integration can also be formed if the AP and eNB are co-located and have direct communication between them rather communicating via the RAFC. Another example in such a co-located case is that the RAFC is implemented as a function within the eNB. Similarly, one can think of direct communication between the AC, radio network controller (RNC), base station subsystem (BSS) etc.

The inventors have appreciated that traffic steering or offloading may be implemented using a new criterion of real time subscription information, or charging data. For example, the decision of which radio access network to use may be based at least in part on charging data, which may comprise one or more of:
∘ A quota available (i.e. traffic amount available within a specific time, e.g. 1 month) to a user subscription on 3GPP and/or Wi-Fi RANs
∘ A cost per kbyte of data for a user subscription on 3GPP and/or Wi-Fi RANs
∘ A maximum bitrate available to a user subscription on 3GPP and/or Wi-Fi RANs. This may vary due to throttling in the core network. For example, if the usage exceeds a nominal amount, such as 10GBytes within a specific time, e.g. 1 month, the bitrate may be decreased to a minimum rate, e.g to 128 kb/s
∘ A remaining credit available to a user subscription on 3GPP and/or Wi-Fi RANs
∘ A remaining time for a user subscription on 3GPP and/or Wi-Fi RANs

It is noted that, whilst the above examples relate to traffic steering from a 3GPP RAN to a Wi-Fi RAN, the same principles may be employed when transferring from any RAN to another RAN.

Typically, each subscriber will have a subscription plan (e.g. comprising a max bitrate, a data bucket, a price/kbyte etc.) for all RANs, including Wi-Fi.

Disclosed herein are methods and apparatus for transferring subscription data, which set out how subscription information can be transferred in a core network and a service network. If, for example, an online charging scenario based on P-GW functions is used for a 3GPP RAN (see 3GPP TS 32.251 for more details), and WLAN 3GPP IP Access is used for a Wi-Fi RAN (see 3GPP TS 32.252 for more details) then the subscription information described above can then be found for all RANs according to table below:

| **Charging information** | **Lowest Possible location of information** | **Retreived via** |
|---|---|---|
| Quota | P-GW | Interface: Ro (just as an example of Diameter based interface between OCS and IP multimedia subsystem (IMS) call state control function (CSCF) functions) |
| | | Message: credit control register (CCR) |
| | | Information Element within the listed message: Remaining-Balance (Optional) |
| | | Reference: TS.32.299 |
| Cost per kbyte | P-GW | Interface: Ro |
| | | Message: CCR |
| | | Information Element within the listed message: Cost-Information (Optional) |
| | | Reference: TS.32.299 |
| Max bitrate | P-GW | Interface: Ro |
| | | Message: CCR |
| | | Information Element within the listed |
| | | message: Multiple-Service-Credit-Control (Optional) |
| Remaining credit | P-GW | Interface: Ro |
| | | Message: CCR |
| | | Information Element within the listed message: Remaining-Balance (Optional) |
| | | Reference: TS.32.299 |
| Remaining time | P-GW | Interface: Ro |
| | | Message: CCR |
| | | Information Element within the listed |
| | | message: Multiple-Service-Credit-Control (Optional) |
| | | Reference: TS 32.299 |

It can be seen from the table that, in the exemplary scenario discussed, all the charging information can be retrieved from the P-GW.

For CAMEL based charging, typically none of the charging information is available in the core network domain. The charging information may be retrieved from a CSE.

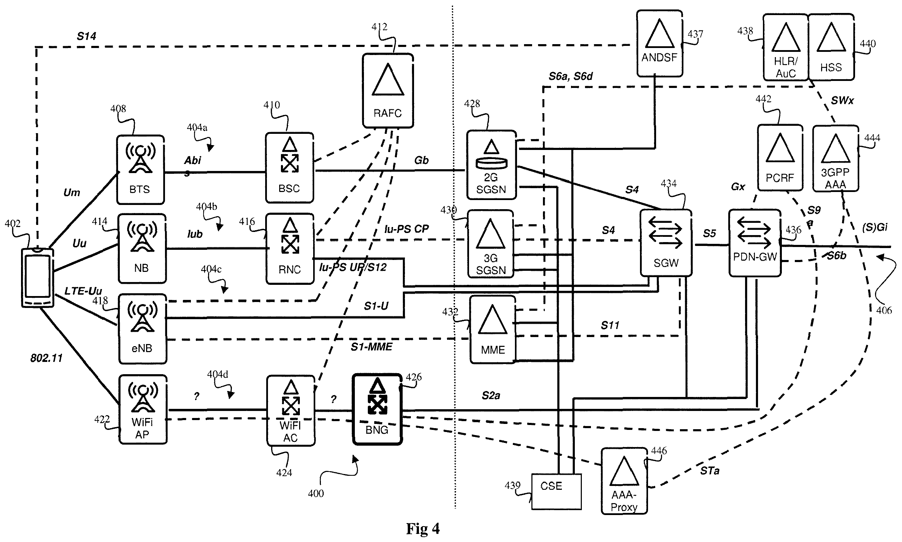

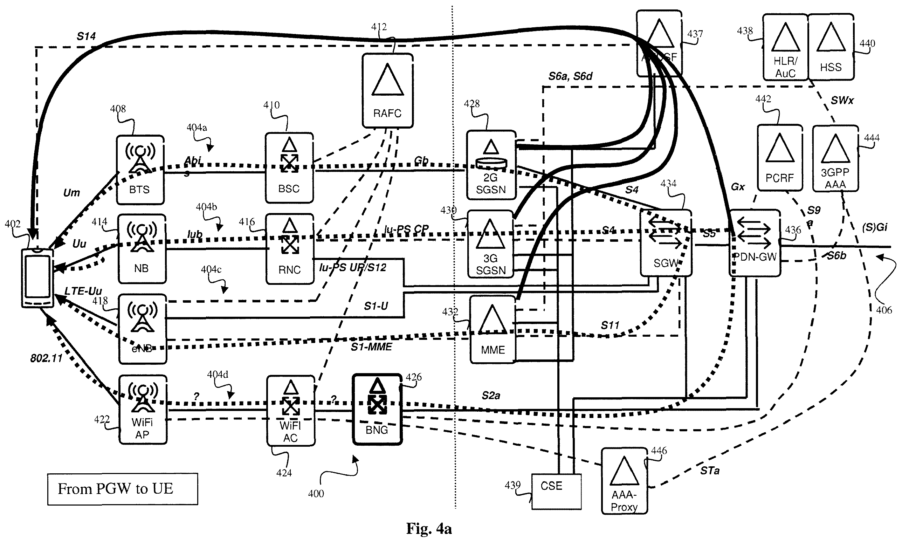

Figure 4 shows a telecommunications system 400 for connecting a UE 402 to at least one of a plurality of RANs 404a-d.

The UE 402 may be any computer device and, in particular, may be a mobile device, such as a laptop computer, a mobile telephone, a smartphone or a tablet computer. The UE 402 is in electrical communication with each of the RANs 404a-d. The electrical communication may be provided by a wired or wireless connection.

The plurality of RANs 404a-d comprises a second generation (2G) RAN 404a, a third generation (3G) RAN 404b, an LTE RAN 404c and a Wi-Fi RAN 404d. Other RANs may be provided but are not shown in Figure 4.

The 2G RAN 404a comprises a base transceiver station (BTS) 408, which is in electrical communication with the UE 402 via a Um interface. The BTS 408 is in electrical communication with a base station controller (BSC) 410. In the exemplary system 400, the BTS 408 is connected to the BSC 410 via an Abis interface. The BSC 410 is in electrical communication over the control plane with an RAFC 412. In other arrangements, the RAFC 412 is implemented as an internal function in the BSC 410.

The 3G RAN 404b comprises a nodeB (NB) 414, which is in electrical communication with the UE 402 via a Uu interface. The NB 414 is in electrical communication with an RNC 416 via an lub interface. The RNC 416 is in electrical communication over the control plane with the RAFC 412. In other arrangements, the RAFC 412 is implemented as an internal function in the RNC 416.

The LTE RAN 404c comprises an eNB 418 in electrical communication with the UE 402 via an LTE-Uu interface. The eNB 418 is in electrical communication with the core network 406. In addition, the eNB 418 is in electrical communication over the control plane with the RAFC 412. In other arrangements, the RAFC 412 may be implemented as an internal function in the eNB 418.

The Wi-Fi RAN 404d comprises a Wi-Fi AP 422 in electrical communication with the UE 402 over an 802.11 interface. The AP 422 is in electrical communication with a Wi-Fi AC 424, which, in turn is in electrical communication with a broadband network gateway (BNG) 426. The AC 424 is in electrical communication with the RAFC 412 over the control network. In other arrangements, the RAFC 412 may be implemented as an internal function in the AC 424.

Each of the RANs 404a-d may provide access for the UE 402 to the core network 406. The RAFC 412 is operable to select one or more of the RANs 404a-d to which the UE 402 will be connected. As described above, the RAFC 412 may be provided by a single RAN node. Alternatively, the RAFC 412 may be distributed over a plurality of RAN nodes.

The core network 406 comprises a 2G SGSN 428 that is in electrical communication with the BSC 410 via a Gb interface. The core network also comprises a 3G SGSN 430 that is in electrical communication with the RNC 416 over the control plane via an lu-PS CP interface. The core network also comprises an MME 432 in electrical communication with the eNB 418 over the control plane via an S1-MME interface. The 2G SGSN 428, the 3G SGSN 430 and the MME 432 are connected to each other over the control plane. In addition, the 2G SGSN 428, the 3G SGSN 430 and the MME 432 are connected to a serving gateway (S-GW) 434 either over the control plane or the user plane. The RNC 416 is electrically connected to the S-GW 434 via an lu-PS UP or S12 interface. The eNB 418 is electrically connected to the S-GW 434 via an S1-U interface. The S-GW 434 is electrically connected to a P-GW (or PDN-GW) 436 via an S5 interface. The BNG 426 is in electrical communication with the P-GW 436 via an S2a interface. The 2G SGSN 428, the 3G SGSN 430, the MME 432, SGW 434 and the P-GW 436 are in electrical communication with an access network discovery and selection function (ANDFS) 437 over the control plane. The 2G SGSN 428, the 3G SGSN 430, the MME 432, SGW 434 and the P-GW 436 are also in electrical communication with a CSE 439, which stores charging data relating to CAMEL.

Various other core network nodes and/or functions, such as an HLR 438, an HSS 440, a PCRF 442, a 3GPP AAA 444 and an AAA proxy 446 are in electrical communication with one or more other nodes and/or functions in the core network and/or the RANs, at least as shown in Figure 4.

The ANDSF 437 is an entity defined by 3GPP for providing access discovery information as well as mobility and routing policies to the UE 402. The ANDSF 437 is an entity added to the 3GPP architecture in Release 8 of 3GPP TS 23.402 and further details of the ANDSF can be found in that document, and later releases of it. The ANDSF server 437 is connected to the UE 402 via an S14 interface and its main goal is to provide the UE 402 with RAN 404a-d information in a resource efficient and secure manner. The communication between the UE 402 and the ANDSF server 437 is defined as an IP-based S14-interface.

The inventors have appreciated that by supplying information about available 3GPP and non-3GPP access networks to the UE 402, the ANDSF 437 enables an energy-efficient mechanism of network discovery, where the UE 402 can avoid continuous and energy-consuming background scanning. Furthermore, the ANDSF 437 may provide mobile operators with a tool for the implementation of flexible and efficient UE 402 traffic steering of access mechanisms, where policy control can guide UEs 402 to select one particular RAN over another.

The ANDSF 437 supplies three types of information - discovery information, inter-system mobility policies (ISMP) and inter-system routing policies (ISRP). All these are summarized and implemented via ANDSF managed objects (MO), which are communicated to UEs 402 via an over-the-top (OTT) signaling channel (the S14 interface), such as simple object access protocol extensible markup language (SOAP-XML) messages.

The discovery information provides the UE 402 with information regarding the availability of different RATs in the UE's 402 vicinity. This helps the UE 402 to discover available 3GPP and non-3GPP access networks without the burden of continuous background scanning. ISMPs are policies which guide the UE 402 to select the most preferable 3GPP or non-3GPP access. The ISMPs are used for UEs 402 that access a single access (e.g. 3GPP or Wi-Fi) at a time. The ISMP information specifies the behavior of UEs 402, which can be connected to only one access network at a given time (e.g. either 3GPP, WLAN, WiMAX, etc). If the UE 402 supports connection to several access networks at the same time, a mobile operator might use a further type of information, ISRP, to increase the granularity of the RAN selection. In that case, the UEs 402 will be provided with policies, which specify how the traffic flows should be distributed over the different RANs (for example, voice is only allowed to be carried over 3GPP RAN, while Internet video streaming and best-effort traffic can be routed via a Wi-Fi RAN). The ANDSF 437 provides mobile operators with a tool to determine how the UEs 402 connect to different RANs and hence allows them to add more flexibility in their traffic planning.

The exemplary layout of Figure 4 showing the UE 402, the RANs 404a-d and the core network 406 will be used herein as basis to describe the methods and apparatus for connecting a UE 402 to one or more RANs 404a-d. It is noted that the methods and apparatus may also be used with other telecommunications network configurations.

Dependent on the type of charging used (e.g. PCRF or CAMEL), different core network nodes may be configured to retrieve charging data for a subscription of a user to a telecommunications service. For example, in PCRF case, the P-GW 436 stores the charging data required, as set out in the table above. Alternatively, in CAMEL, the required charging data is stored by the CSE 439.

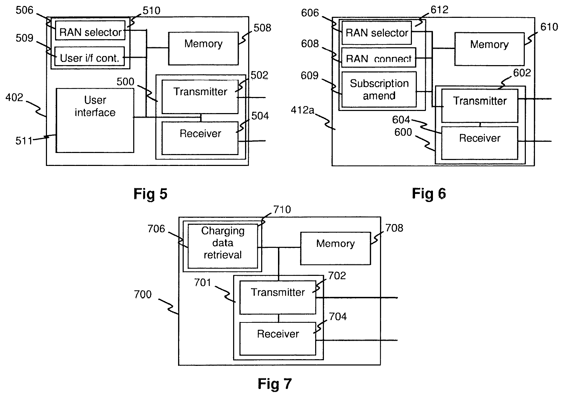

Figure 5 shows a more detailed arrangement of a UE 402. Figure 6 shows a more detailed arrangement of a RAN node 412a for, at least partially, connecting a UE 402 to a RAN 404a-d. Figure 7 shows a more detailed arrangement of a core network node 700, which may be any of the core network nodes 428, 430, 432, 434, 436.

Referring to Figure 5, a UE 402 is shown. The UE 402 comprises a communications function 500, which comprises a transmitter 502 and a receiver 504. The transmitter 502 and receiver 504 are in electrical communication with other nodes and/or functions in the telecommunications system and are configured to transmit and receive data therefrom. The UE 402 further comprises a RAN selector 506 and a memory 508. The UE 402 may also comprise a user interface controller 509 for controlling a user interface 511. Each of the transmitter 502, receiver 504, RAN selector 506, memory 508, user interface controller 509 and user interface 511 is in electrical communication with the other features 502, 504, 506, 508, 509, 511 of the UE 402. The UE 402 can be implemented as a combination of computer hardware and software. In particular, the RAN selector 506 may be implemented as software configured to run on a processor 510. The memory 508 stores the various programs/executable files that are implemented by the processor 510, and also provides a storage unit for any required data. The programs/executable files stored in the memory 508, and implemented by the processor 510, can include the RAN selector 506 and user interface controller 509 but are not limited to such.

Referring to Figure 6, a RAN node 412a is shown. It is noted that in exemplary methods and apparatus, the RAN node relates to the RAFC 412. The function of the RAFC 412 may be distributed across a number of RAN nodes. As a result, the node 412a is configured to, at least partially, connect a UE 402 to a RAN 404a-d, in that it may share the function of the RAFC 412a with one or more other RAN nodes. Therefore, the RAN node 412a is not explicitly shown in Figure 4, but it will be understood as comprising at least part of the RAFC 412 function. In exemplary methods and apparatus, the RAFC 412 may be distributed across one or more of the BSC 410, the RNC 416, the eNB 418 and the Wi-Fi AC 424. Therefore, the RAN node 412a may comprise any one of those nodes or, alternatively, a standalone node.

The RAN node 412a comprises a communications function 600, which comprises a transmitter 602 and a receiver 604. The transmitter 602 and receiver 604 are in electrical communication with other nodes and/or functions in the telecommunications system and are configured to transmit and receive data therefrom. The RAN node 412a further comprises a RAN selector 606, a RAN connector 608, a subscription amender 609 and a memory 610. Each of the transmitter 602, receiver 604, RAN selector 606, RAN connector 608, subscription amender 609 and memory 610 is in electrical communication with the other features 602, 604, 606, 608, 609, 610 of the RAN node 412a. The RAN node 412a can be implemented as a combination of computer hardware and software. In particular, the RAN selector 606, the RAN connector 608 and the subscription amender 609 may be implemented as software configured to run on a processor 612. The memory 610 stores the various programs/executable files that are implemented by the processor 612, and also provides a storage unit for any required data. The programs/executable files stored in the memory 610, and implemented by the processor 612, can include the RAN selector 606, the RAN connector 608 and the subscription amender 609, but are not limited to such.

Referring to Figure 7, a core network node 700 is shown. As set out above, the core network node 700 may be any one of the core network nodes 2G SGSN 428, 3G SGSN 430, MME 432, S-GW 434 and P-GW 436 dependent on the charging system used. The core network node 700 comprises a communications function 701, which comprises a transmitter 702 and a receiver 704. The transmitter 702 and receiver 704 are in electrical communication with other nodes and/or functions in the telecommunications system and are configured to transmit and receive data therefrom. The core network node 700 further comprises a charging data retriever 706 and a memory 708. Each of the transmitter 702, receiver 704, charging data retriever 706 and memory 708 is in electrical communication with the other features 702, 704, 706, 708 of the core network node 700. The core network node 700 can be implemented as a combination of computer hardware and software. In particular, the charging data retriever 706 may be implemented as software configured to run on a processor 710. The memory 708 stores the various programs/executable files that are implemented by a processor 710, and also provides a storage unit for any required data. The programs/executable files stored in the memory 708, and implemented by the processor 710, can include the charging data retriever 706 but are not limited to such.

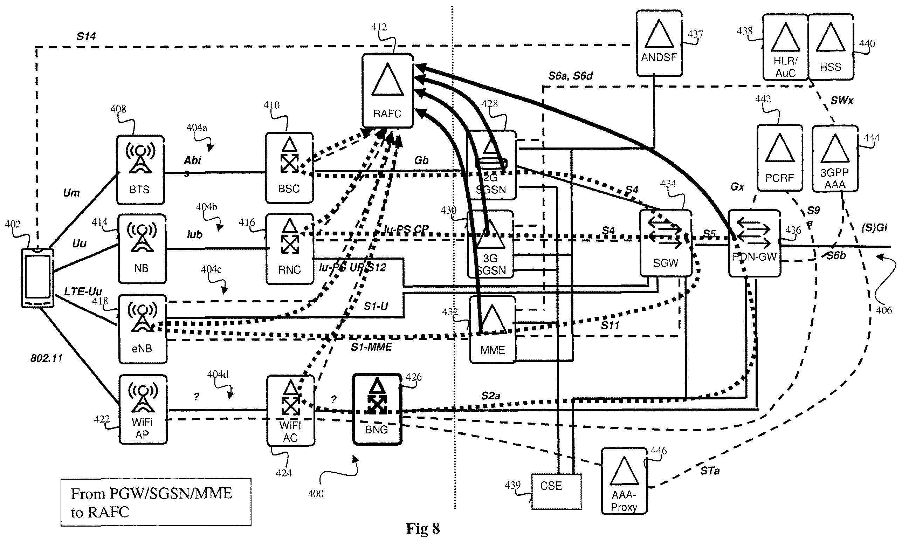

Referring to Figures 4a, 8 and 9, a method for operating a core network node is described herein. Figures 4a and 8 show the exemplary layout of Figure 4 and so this is not described again in detail. Similar features in Figures 4a and 8 are given the same reference numerals as described above in relation to Figure 4. Figure 4a shows how charging data is transferred to the UE 402. Figure 8 shows how charging data is transferred to the RAFC 412 or, more specifically, to one or more RAN nodes 412a.

Using the example of PCRF charging, the core network node 700 may be the P-GW 436 core network node. In this case, the charging data retriever 706 of the core network node 700 is configured to retrieve 900 charging data for a user subscription to a network service, as defined herein. The charging data is stored at the core network node 700 and may be obtained from the memory 708. Using the example of CAMEL charging, the network node 700 may be one or more of the 2G SGSN 428, the 3GSGSN 430, the MME 432, the SGW 434 and the P-GW 436. In this case, the charging data retriever 706 of the core network node 700 is configured to retrieve 900 data relating to a user subscription from the CSE 439, where it is stored.

The charging data may comprise one or more of: the quota available to a user subscription on one or more RANs 404a-d; the cost per kbyte of data for a user subscription on one or more RANs 404a-d; the maximum bitrate available to a user subscription on one or more RANs 404a-d, which may vary due to throttling on the core network, for example, if the usage exceeds a nominal amount, such as 10 GBytes, the bitrate may be decreased to a minimum rate; the remaining credit available to a user subscription on one or more RANs 404a-d; and the remaining time for a user subscription on one or more RANs 404a-d.

The charging data is transmitted 902 by the transmitter 702 of the communications function 701 of the core network node 700 toward the UE 402 and/or the RAFC 412. As shown in Figure 4a, if PCRF is used, the charging data is transmitted 902 to the UE 402 through the user plane and/or the control plane via one or more of the plurality of RANs 404a-d. Specifically, the charging data may be transmitted by any of the following routes through the user plane and/or control plane:
∘ From the core network node 700 through the S-GW 434, the 2G SGSN 428 and through the 2G RAN 404a to the UE 402
∘ From the core network node 700 through the S-GW 434, the 3G SGSN 430 and through the 3G RAN 404b to the UE 402
∘ From the core network node 700 through the S-GW 434 and directly through the 3G RAN 404b to the UE 402
∘ From the core network node 700 through the S-GW 434 and directly through the LTE RAN 404c to the UE 402
∘ From the core network node 700 through the S-GW 434, the MME 432 and through the LTE RAN 404c to the UE 402
∘ From the core network node 700 directly through the Wi-Fi RAN 404b to the UE 402

Transferring the charging data to the UE 402 may comprise in-band signaling over the PS user plane. Therefore, a user plane protocol may be introduced between the P-GW 436, the 2G and 3G SGSN 428, 430 or the MME 432 and the UE 402. This solution applies for all different accesses as shown in Figure 4a i.e. GSM, WCDMA, LTE and Wi-Fi.

Transferring the charging data to the UE 402 may comprise 3GPP control plane based signaling. This may comprise a non access stratum level protocol or an extension to other protocols. The information can be provided to the UE 402 for example at initial attach, packet data protocol context or packet data network connection creation or in relation to handover events.

The charging data may be transmitted from the transmitter 702 of the core network node 700 to the UE 402 through the ANDSF 437. This may be done whether PCRF or CAMEL is used. Specifically, the transmitter 702 is configured to transmit the charging data to the ANDSF 437, which then forwards the data to the UE 402. That is, the P-GW 436, 2G or 3G SGSN 428, 430 or MME 432 signals to the UE 402 via ANDSF 437 over S14. The mechanism of transfer can either be a push or pull type of operation defined for the S14 interface.

When transmitting charging data to the RAFC 412 and as shown in Figure 8, if PCRF is used, the transmitter 702 of the core network node 700, which in that case is the P-GW 436, transmits the charging data to the RAFC 412. This may be done via any one of the RANs 404a-d. Specifically, the charging data may be transmitted by any of the following routes:
∘ From the core network node 700 through the S-GW 434, the 2G SGNSN 428, the BSC 410 to the RAFC 412
∘ From the core network node 700 through the S-GW 434, the 3G SGNSN 430, the RNC 416 to the RAFC 412
∘ From the core network node 700 through the S-GW 434, the MME 432, the eNB 408 to the RAFC 412
∘ From the core network node 700 through the BNG 426, the Wi-Fi AC 424 to the RAFC 412

Therefore, the P-GW 436, the 2G and 3G SGSN 428, 430 and MME 432 may signal to the current serving RAN node for the UE 402 using an interface. This may be done using either user plane or control plane protocols and interfaces. The main principle is that the P-GW 436 (and really nodes also on the SGi interface) are able to locate the current serving RAN node for the UE 402 and then use this knowledge to communicate with that RAN node.

The signaling may utilize 3GPP control plane based signaling. This could be using an RAN to core network level protocol or an extension to existing protocols. For example the charging information can be provided to the RAN at UE context establishment and/or at creation and modification of radio bearers.

Therefore, the charging data may be transferred to the RAFC 412 and/or the UE 402 either by an existing interface or proprietary interfaces.

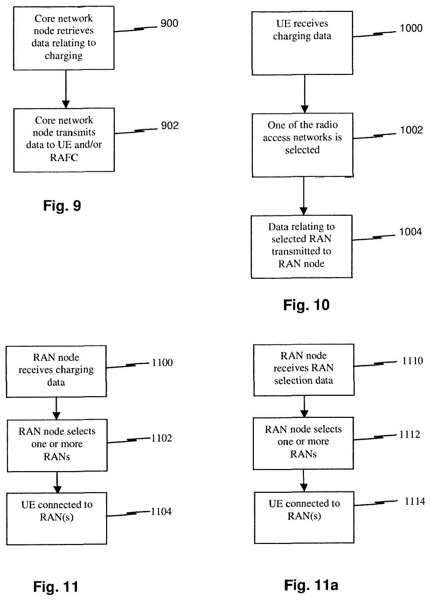

If the charging data is transmitted to the UE 402, it may make a selection of a RAN 404a-d. Referring to Figure 10, the UE 402 receives 1000 charging data at the receiver 504 of the communications function 500. Based at least in part on the received charging data, the RAN selector 506 selects 1002 one or more of the plurality of RANs 404a-d. The selection may be undertaken automatically by the UE 402 based, for example, on a set of predefined criteria. That is, the UE 402 may have instructions stored in the memory 508 for the RAN selector 506 to select the Wi-Fi RAN 404d if the quota for a 3GPP RAN (e.g. the 3G RAN 404b or the LTE RAN 404c) is entirely used up or used to within certain limits. Alternatively, the RAN selector 506 may select an RAN if the cost of data on the current RAN increases beyond a threshold. Alternatively, an RAN may be selected based on data usage over a period, say a month, on a given UE 402 or subscription. The selection may be based on a prediction, based on the remaining quota, of whether enough quota remains for the remaining time of the period. Other criteria may be used and the two provided are merely exemplary.

In other arrangements, the UE 402 comprises a user interface 511 that is controlled by a user interface controller 509 configured to present the charging data to a user and receive a selection of a RAN from the user. In exemplary methods and apparatus, the user interface 511 may comprise one or more of a display, an audio output, a keyboard or a touchscreen. When the charging data is presented to a user, the user is able to select a RAN based on their requirements. For example, a user may wish to select the cheapest radio access profile. Alternatively, a user may consider bitrate to be of greater importance than cost.

Once a RAN 404a-d has been selected, data relating to the selection is transmitted 1004 by the transmitter 502 to one or more RAN nodes.

The one or more RAN nodes may comprise RAN nodes 412a, as shown in Figure 6 and may be configured to undertake the function of the RAFC 412. In other arrangements, the RAFC 412 may be included as an internal function in the RAN nodes 412a. The data relating to the selection may comprise data identifying the selected RAN. In such cases, the RAN nodes 412a are configured to use the selection information transmitted by the UE 402 for connecting the UE 402 to one or more RANs 404a-d.

In other arrangements, the data relating to the selection of a RAN 404a-d may comprise an instruction to connect to a specific RAN 404a-d. Therefore, the connection may be undertaken solely by the UE 402.

Alternatively, and as explained below, the data relating to the selection may comprise preference data that may be used by the RAFC 412 but the RAFC 412 may have the final say on which RAN 404a-d the UE 402 is connected to. For example, the selection information may comprise a plurality of RANs 404a-d or one or more combinations of RANs 404a-d and a condition for the use of each, such as an order of preference.

If the charging data has been transmitted to the RAN node 412a (or the RAFC 412), the RAN selector 606 of the RAN node 412a may be configured to select one of the RANs 404a-d to connect to the UE 402. Referring to Figure 11, the RAN node 412a receives 1100 charging data for a subscription of a user at the receiver 604 of the communications function 600.

Based at least in part on the received charging data, the RAN selector 606 selects 1102 a RAN 404a-d. The selection may be based on selection criteria retained as part of the RAFC 412 in the node 412a. For example, the RAFC 412 may be configured to select the RAN that is cheapest for the user, or that has the best bitrate for a user, or that is some compromise between those two positions. Other selection criteria are possible. In exemplary methods and apparatus, the RAFC 412 may be configured to select a RAN 404a-d based on a combination of the charging data and network constraints and/or requirements. The network constraints or requirements may comprise network loading information. That is, the RAFC 412 may steer traffic away from one RAN 404a-d if, for example, the loading on that RAN 404a-d is greater than a threshold level.

The RAN connector 608, which forms part of the RAFC 412, connects 1104 the UE 402 to the RAN 404a-d selected by the RAN selector 606. It is noted that in particular exemplary methods and apparatus, the RAN connector 608 may be configured to connect the UE 402 to a plurality of RANs 404a-d).

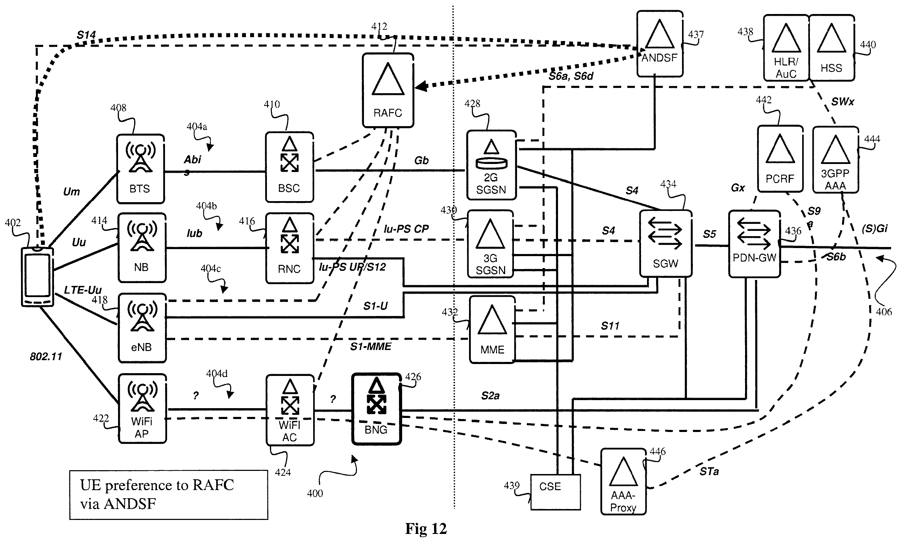

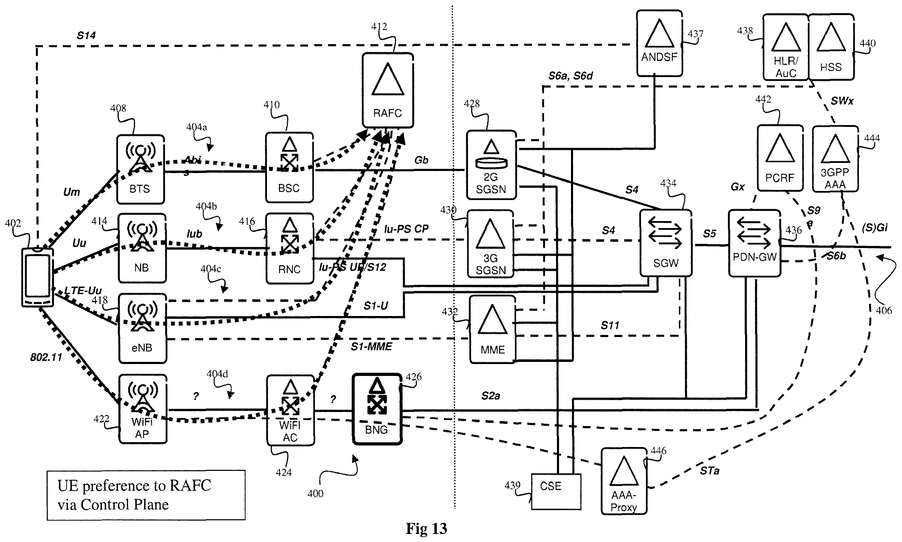

Figures 12 and 13 show the exemplary layout of Figure 4 and so are not described again in detail. Similar features in Figures 12 and 13 are given the same reference numerals as described above in relation to Figure 4. Figures 12 and 13 show how data relating to a selection at the UE 402 is transferred to the RAFC 412 or, more specifically, to one or more RAN nodes 412a.

As explained above, the selection data transmitted to the RAN node 412a (or the RAFC 412) may comprise an instruction to the RAFC 412 to connect the UE 402 to a given RAN 404a-d. Alternatively, the selection information transmitted to the RAN node 412a (or the RAFC 412) by the UE 402 may comprise preference data. In exemplary methods and apparatus, a user or UE 402 selection may need to be synchronised with requirements of the RAFC 412.

Figure 12 shows the case when selection information from the UE 402 is sent to the RAFC 412 via the ANDSF 437 function. Figure 13 shows the case when selection information from the UE 402 is sent to the RAFC 412 via 3GPP Control Plane protocols. Specifically, referring to Figure 13, the selection information may be transmitted to the RAFC 412 by one or more of the following routes:
∘ From the UE 402 through the BTS 408 and the BSC 410 to the RAFC 412
∘ From the UE 402 through the NB 414 and the RNC 416 to the RAFC 412
∘ From the UE 402 through the eNB 418 to the RAFC 412
∘ From the UE 402 through the Wi-Fi AP 422 and the Wi-Fi AC 424 to the RAFC 412

The RAN selector 606 of the RAN node 412a (or the RAFC 412) may base the selection 1102 of an RAN 404a-d on the information transmitted from the UE 402. Specifically, the RAN node 412a may balance the preference of a user against network requirements and constraints, which may include network faults and/or network loading. In exemplary methods and apparatus, the UE 402 may send selection information comprising a plurality of RANs 404a-d or one or more combinations of RANs 404a-d, such as a list, and an order of preference. The RAN node 412a may be configured to implement the highest possible preference of the user within the network requirements or constraints. This may mean that the RAN node 412a may not be able to implement a user selection. The RAN node 412a may monitor the network loading so that the user selection may be implemented later if the loading decreases sufficiently.

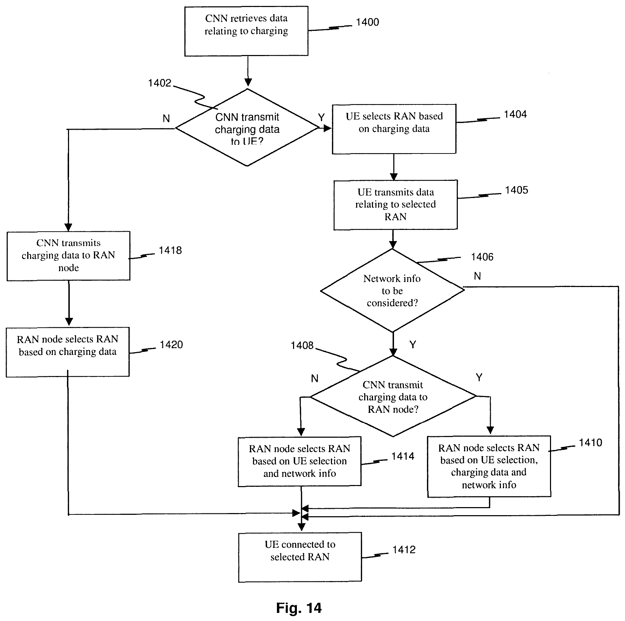

Referring to Figure 14, a method of operating a telecommunications system is shown. It is noted that sections of the method shown in Figure 14 are undertaken by each of the UE 402, the RAN node 412a and the core network node 700 described above. Further detail of the methods of operation of each of those apparatus may therefore be provided by Figure 14.

The charging data retriever 706 of the core network node 700 retrieves 1400 charging data. The charging data retriever 706 of the core network node 700 decides 1402 whether the charging data should be transmitted to the UE 402.

If yes, the transmitter 702 transmits the data to the UE 402, which receives the data at the receiver 504 and the RAN selector 506 selects 1404 one or more RANs 404a-d, as described above. The UE 402 transmits 1405 data relating to the selected one or more RANs (as described above) to one or more nodes in one or more of the plurality of RANs. It is decided 1406 whether network requirements or constraints are to be considered before the UE 402 is connected to a RAN 404a-d. If no, the UE 402 connects to the selected one or more RANs 404a-d 1412. In such cases, the connection is undertaken by the UE 402. If yes, it is decided 1408 whether the charging information is transmitted to the RAN node 412a. The decision 1408 may be undertaken at the charging data retriever 706 of the core network node 700. Alternatively, the decision may be undertaken at the RAN node 412a.

If yes, the transmitter 702 of the core network node 700 transmits the charging data to the RAN node 412a, which receives the charging data at the receiver 604. The RAN selector 606 selects 1410 a RAN node 404a-d based at least partly on selection information received from the UE 402, the charging information received from the core network node 700 and the network requirements or constraints, which are known to the RAN node 412a. The UE 402 is then connected 1412 to the RAN 404a-d selected by the RAN node 412a. The RAN connector 608 of the RAN node 412a may be configured at least partially to connect the UE 402 to the selected RAN 404a-d.

If at decision 1408, the core network node 700 does not transmit the charging information to the RAN node 412a, the RAN selector 606 selects 1414 a RAN 404a-d based at least partly on the UE selection and network requirements or constraints, which are known to the RAN node 412a. The RAN connector 608 may then at least partially connect 1412 the UE 402 to the selected RAN 404a-d.

If at decision 1402, the core network node 700 does not transmit the charging data to the UE 402, the core network node transmits 1418 the charging data to the RAN node 412a. The RAN selector 606 selects 1420 a RAN 404a-d at least partly based on the charging information received from the core network node 700. The RAN connector 608 then connects 1412 the UE 402 to the selected RAN 404a-d.

In all the methods and apparatus described herein, a user (or UE 402) can automatically decide to start a certain background services or maintenance services (e.g. update of applications and/or OS) based on the remaining quota of the data traffic for a certain remaining time period.

All methods and apparatus described herein may be used in conjunction with Hot-Spot technology, in particular, Hot-Spot 2.0, now officially called PassPoint ("Hotspot 2.0 (Release 1) Technical Specification", Wi-Fi Alliance (RTM) Technical Committee Hotspot 2.0 Technical Task Group, V 1.0.0). HS2.0 is primarily geared toward Wi-Fi networks and builds on IEEE 802.11u.

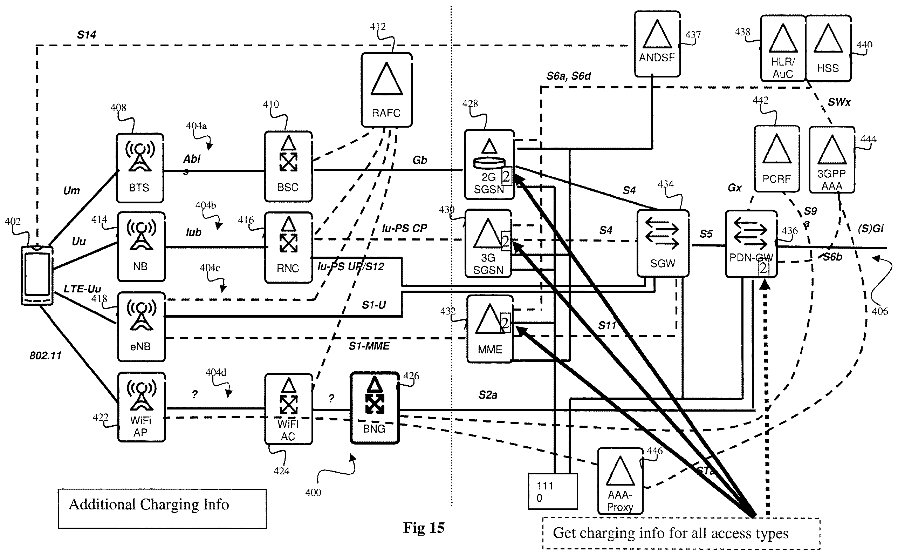

Referring to Figure 15, a charging data retriever 706 of a core network node 700, which in exemplary methods and apparatus may be any of the 2G SGSN 428, the 3G SGSN 430, the MME 432, SGW 434 or the P-GW 436, retrieves charging information relating to more than one, typically all, of the RANs 404a-d. The charging information relating to each individual RAN 404a-d is transmitted by the transmitter 702 to the RAFC 412 (or a RAN node 412a) using one or more of the routes described above. A subscription amender 609 of the RAFC 412 (or RAN node 412a) may then amend the charging information based at least partly on network constraints or requirements. That is, if one RAN 404a-d is experiencing high load conditions, the subscription amender 609 may amend charging information for that RAN 404a-d more expensive in order to steer traffic away from the RAN 404a-d. The transmitter 602 may transmit the amended charging information to the UE 402, where a selection of a RAN 404a-d is made, as set out above, but based on the amended charging information. The amended charging information is more likely to result in UEs 402 selecting a RAN 404a-d that is not experiencing high loading conditions. Alternatively, the RAFC 412 may select a RAN 404a-d, as set out above, but based on the amended charging information.

A computer program may be configured to provide any of the above described methods. The computer program may be provided on a computer readable medium. The computer program may be a computer program product. The product may comprise a non-transitory computer usable storage medium. The computer program product may have computer-readable program code embodied in the medium configured to perform the method. The computer program product may be configured to cause at least one processor to perform some or all of the method.

Various methods and apparatus are described herein with reference to block diagrams or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

Computer program instructions may also be stored in a computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks.

A tangible, non-transitory computer-readable medium may include an electronic, magnetic, optical, electromagnetic, or semiconductor data storage system, apparatus, or device. More specific examples of the computer-readable medium would include the following: a portable computer diskette, a random access memory (RAM) circuit, a read-only memory (ROM) circuit, an erasable programmable read-only memory (EPROM or Flash memory) circuit, a portable compact disc read-only memory (CD-ROM), and a portable digital video disc read-only memory (DVD/Blu-ray).

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks.

Accordingly, the invention may be embodied in hardware and/or in software (including firmware, resident software, micro-code, etc.) that runs on a processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated.

The skilled person will be able to envisage other embodiments without departing from the scope of the appended claims.

## Claims

1. A user equipment (402) for connecting to at least one of a plurality of radio access networks (404a-d) in a telecommunications system (400), the user equipment comprising:
a receiver (504) configured to receive charging data relating to the at least one of the plurality of radio access networks for a subscription of a user of the telecommunications system (400), wherein the charging data comprises one or more of: a quota available to the user subscription on one or more of the plurality of radio access networks; a cost per unit of data for the user subscription on one or more of the plurality of radio access networks; a maximum bitrate available to the user subscription on one or more of the plurality of radio access networks; remaining credit available to the user subscription on one or more of the plurality of radio access networks; and remaining time for the user subscription on one or more of the plurality of radio access networks;
a radio access network selector (506) configured to select, based at least partly on the charging data, one or more of the plurality of radio access networks; and
a transmitter (502) configured to transmit data relating to the selected radio access network to one or more nodes in one or more of the plurality of radio access networks for connecting the user equipment to the selected radio access network.

2. A user equipment (402) according to claim 1, wherein the radio access network selector (506) is configured to select at least one of the plurality of radio access networks (404a-d) based on the charging data and further comprises a user interface (509) configured to present the selected at least one radio access network (404a-d) to a user, and to receive a user selection accepting or rejecting the selected at least one radio access network, wherein optionally the user interface is configured to present the charging data to the user.

3. A user equipment (402) according to claim 2, wherein the receiver (504) is configured to receive the charging data for the subscription of a user from a node (412a) at least partially undertaking an access network discovery and selection function (412) and optionally, wherein the receiver (504) is configured to receive the charging data for the subscription of a user over one or more of: an S14 interface; a user plane of one or more of the plurality of radio access networks (404a-d); and a control plane of one or more of the plurality of radio access networks.

4. A user equipment (402) according to any preceding claim, wherein the data transmitted by the transmitter (502) comprises user preference data identifying a plurality of radio access networks (404a-d) or one or more combinations of radio access networks, each having an associated condition for use,, wherein optionally the user preference data comprises data relating to a plurality of radio access networks or one or more combinations of radio access networks, and an order in which each is preferred.

5. A method of operating a user equipment (402) for connecting to at least one of a plurality of radio access networks (404a-d) in a telecommunications system (400), the method comprising:
receiving (1000) charging data relating to the at least one of the plurality of radio access networks for a subscription of a user of the telecommunications system (400) at a receiver (504) of the user equipment, wherein the charging data comprises one or more of: a quota available to the user subscription on one or more of the plurality of radio access networks; a cost per unit of data for the user subscription on one or more of the plurality of radio access networks; a maximum bitrate available to the user subscription on one or more of the plurality of radio access networks;
remaining credit available to the user subscription on one or more of the plurality of radio access networks; and remaining time for the user subscription on one or more of the plurality of radio access networks;
selecting (1002), by a radio access network selector (506) of the user equipment, one of the plurality of radio access networks, based at least partly on the charging data; and
transmitting (1004) data relating to the selected radio access network from a transmitter (502) to one or more nodes in one or more of the plurality of radio access networks for connecting the user equipment to the selected radio access network.

6. A radio access network node (412a) for at least partially connecting a user equipment (402) to at least one of a plurality of radio access networks (404a-d) in a telecommunications system (400), the network node comprising:
a receiver (604) configured to receive charging data relating to the at least one of the plurality of radio access networks for a subscription of a user of the telecommunications system (400), wherein the charging data comprises one or more of: a quota available to the user subscription on one or more of the plurality of radio access networks; a cost per unit of data for the user subscription on one or more of the plurality of radio access networks; a maximum bitrate available to the user subscription on one or more of the plurality of radio access networks;
remaining credit available to the user subscription on one or more of the plurality of radio access networks; and remaining time for the user subscription on one or more of the plurality of radio access networks;
a radio access network selector (606) configured at least partially to select at least one of the plurality of radio access networks, at least partly based on the charging data; and
a radio access network connector (608) configured at least partially to connect the user equipment to the selected radio access network.

7. A radio access network (412a) node according to claim 6, further comprising a subscription amender (609) configured to amend charging data relating to one or more of the plurality of radio access networks (404a-d) for traffic steering, wherein optionally, the charging data is amended at least partly based on network performance levels and/or network load.

8. A radio access network node (412a) according to claim 6 or claim 7, wherein the receiver (602) is configured to receive data from the user equipment (402) over an S14 interface via access network discovery and selection function (437).

9. A method of operating a radio access network node (412a) for at least partially connecting a user equipment (402) to at least one of a plurality of radio access networks (404a-d) in a telecommunications system (400), the method comprising:
receiving (1100) charging data relating to the at least one of the plurality of radio access networks for a subscription of a user of the telecommunications system (400) at a receiver (602) of the radio access network node, wherein the charging data comprises one or more of: a quota available to the user subscription on one or more of the plurality of radio access networks; a cost per unit of data for the user subscription on one or more of the plurality of radio access networks; a maximum bitrate available to the user subscription on one or more of the plurality of radio access networks; remaining credit available to the user subscription on one or more of the plurality of radio access networks; and
remaining time for the user subscription on one or more of the plurality of radio access networks;
at least partially selecting (1102), by a radio access network selector (606) of the radio access network node, at least one of the plurality of radio access networks, the selection being based at least partly on the received charging data; and
at least partially connecting (1104), by a radio access network connector of the radio access network node, the user equipment to the selected radio access network.

10. A telecommunications system (400) for connecting a user equipment (402) to at least one of a plurality of radio access networks (404a-d) in the telecommunications system (400), the system comprising:
a core network node (700) comprising a charging data retriever (706) configured to retrieve charging data relating to the at least one of the plurality of radio access networks for a subscription of a user of the telecommunications system (400), and a transmitter (702) configured to transmit the charging data to a receiver (502) of the user equipment and/or a receiver (602) of a radio access network node (412a) of one or more of the plurality of radio access networks, wherein the charging data comprises one or more of: a quota available to the user subscription on one or more of the plurality of radio access networks; a cost per unit of data for the user subscription on one or more of the plurality of radio access networks; a maximum bitrate available to the user subscription on one or more of the plurality of radio access networks; remaining credit available to the user subscription one or more of the plurality of radio access networks; and remaining time for the user subscription on one or more of the plurality of radio access networks,
wherein the radio access network node comprises a radio access network selector (606) configured, at least partially, to select at least one of the plurality of radio access networks, based at least partly on one or more of: the charging data received from the core network node; and selection data received from the user equipment and relating to a selection of one of the plurality of radio access networks by the user equipment, and
and wherein the radio access network node further comprises a radio access network connector (608) configured to connect, at least partly, the user equipment to at least one of the plurality of radio access nodes, the connection being based at least partly on the selection made by the radio access network selector of the radio access network node.

11. A method of operating a telecommunications system (400) for connecting a user equipment (402) to at least one of a plurality of radio access networks (404a-d) in the telecommunications system (400), the method comprising:
retrieving (1400) charging data relating to the at least one of the plurality of radio access networks for a subscription of a user of the telecommunications system (400), by a charging data retriever (706) of a core network node (700), wherein the charging data comprises one or more of: a quota available to the user subscription one or more of the plurality of radio access networks; a cost per unit of data for the user subscription on one or more of the plurality of radio access networks; a maximum bitrate available to the user subscription on one or more of the plurality of radio access networks; remaining credit available to the user subscription on one or more of the plurality of radio access networks; and remaining time for the user subscription on one or more of the plurality of radio access networks;
transmitting (1402), by a transmitter (704) of the core network node, the charging data to one or more of the user equipment and a radio access network node (412a) of the one or more of the plurality of radio access networks;
selecting (1410; 1414; 1420), at least partially, at least one of the plurality of radio access networks, by a radio access network selector (606) of the radio access network node, based on one or more of: the charging data received from the core network node and selection data received from the user equipment and relating to a selection of one of the plurality of radio access networks by the user equipment; and
connecting (1412) the user equipment to at least one of the plurality of radio access nodes, the connection being based at least partly on the selection made by the radio access network selector of the radio access network node.

12. A non-transitory computer readable medium comprising computer readable code configured, when run on a user equipment, to carry out the method of claim 5.

## Patentansprüche

1. Benutzereinrichtung (402) zum Anschließen an mindestens eines von einer Vielzahl von Funkzugangsnetzen (404a-d) in einem Telekommunikationssystem (400), wobei die Benutzereinrichtung umfasst:
einen Empfänger (504), der dazu konfiguriert ist, Ladedaten in Bezug auf das mindestens eine von der Vielzahl von Funkzugangsnetzen für ein Abonnement eines Benutzers des Telekommunikationssystems (400) zu empfangen, wobei die Ladedaten eines oder mehrere der Folgenden umfassen: ein für das Benutzerabonnement zur Verfügung stehendes Kontingent auf einem oder mehreren der Vielzahl von Funkzugangsnetzen; Kosten pro Dateneinheit für das Benutzerabonnement auf einem oder mehreren der Vielzahl von Funkzugangsnetzen; eine maximale dem Benutzerabonnement zur Verfügung stehende Bitrate auf einem oder mehreren der Vielzahl von Funkzugangsnetzen; dem Benutzerabonnement zur Verfügung stehendes Restguthaben auf einem oder mehreren der Vielzahl von Funkzugangsnetzen; und Restzeit für das Benutzerabonnement auf einem oder mehreren der Vielzahl von Funkzugangsnetzen;
einen Funkzugangsnetzwähler (506), der dazu konfiguriert ist, basierend mindestens teilweise auf den Ladedaten eines oder mehrere der Vielzahl von Funkzugangsnetzen auszuwählen; und
einen Sender (502), der dazu konfiguriert ist, Daten in Bezug auf das ausgewählte Funkzugangsnetz an einen oder mehrere Knoten in einem oder mehreren der Vielzahl von Funkzugangsnetzen zu übertragen, um die Benutzereinrichtung an das ausgewählte Funkzugangsnetz anzuschließen.

2. Benutzereinrichtung (402) nach Anspruch 1, wobei der Funkzugangsnetzwähler (506) dazu konfiguriert ist, mindestens eines der Vielzahl von Funkzugangsnetzen (404a-d) basierend auf den Ladedaten auszuwählen und ferner eine Benutzerschnittstelle (509) umfasst, die dazu konfiguriert ist, das ausgewählte mindestens eine Funkzugangsnetz (404a-d) einem Benutzer anzubieten, und eine Benutzerauswahl zu empfangen, womit das ausgewählte mindestens eine Funkzugangsnetz akzeptiert oder abgelehnt wird, wobei optional die Benutzerschnittstelle dazu konfiguriert ist, die Ladedaten dem Benutzer anzubieten.

3. Benutzereinrichtung (402) nach Anspruch 2, wobei der Empfänger (504) dazu konfiguriert ist, die Ladedaten für das Abonnement eines Benutzers von einem Knoten (412a) zu empfangen, der mindestens teilweise eine Zugangsnetzerkennungs- und -Auswahlfunktion (412) vornimmt, und optional, wobei der Empfänger (504) dazu konfiguriert ist, die Ladedaten für das Abonnement eines Benutzers über eines oder mehrere der Folgenden zu empfangen: eine S14-Schnittstelle; eine Benutzerebene von einem oder mehreren der Vielzahl von Funkzugangsnetzen (404a-d); und eine Steuerebene von einem oder mehreren der Vielzahl von Funkzugangsnetzen.

4. Benutzereinrichtung (402) nach einem der vorstehenden Ansprüche, wobei die vom Sender (502) übertragenen Daten Benutzerpräferenzdaten umfassen, die eine Vielzahl von Funkzugangsnetzen (404a-d) oder eines oder mehrere Kombinationen von Funkzugangsnetzen identifizieren, für die jeweils eine dazugehörige Nutzungsbedingung gilt, wobei die Benutzerpräferenzdaten optional Daten in Bezug auf eine Vielzahl von Funkzugangsnetzen oder eine oder mehrere Kombinationen von Funkzugangsnetzen, sowie eine Reihenfolge, in der sie jeweils bevorzugt werden, umfassen.

5. Verfahren zum Betreiben einer Benutzereinrichtung (402) zum Anschließen an mindestens eines von einer Vielzahl von Funkzugangsnetzen (404a-d) in einem Telekommunikationssystem (400), wobei das Verfahren umfasst:
Empfangen (1000) von Ladedaten in Bezug auf das mindestens eine von der Vielzahl von Funkzugangsnetzen für ein Abonnement eines Benutzers des Telekommunikationssystems (400) an einem Empfänger (504) der Benutzereinrichtung, wobei die Ladedaten eines oder mehrere der Folgenden umfassen: ein für das Benutzerabonnement zur Verfügung stehendes Kontingent auf einem oder mehreren der Vielzahl von Funkzugangsnetzen; Kosten pro Dateneinheit für das Benutzerabonnement auf einem oder mehreren der Vielzahl von Funkzugangsnetzen; eine maximale dem Benutzerabonnement zur Verfügung stehende Bitrate auf einem oder mehreren der Vielzahl von Funkzugangsnetzen;
dem Benutzerabonnement zur Verfügung stehendes Restguthaben auf einem oder mehreren der Vielzahl von Funkzugangsnetzen; und
Restzeit für das Benutzerabonnement auf einem oder mehreren der Vielzahl von Funkzugangsnetzen;
Auswählen (1002), durch einen Funkzugangsnetzwähler (506) der Benutzereinrichtung, eines der Vielzahl von Funkzugangsnetzen, basierend mindestens teilweise auf den Ladedaten; und
Übertragen (1004) von Daten in Bezug auf das ausgewählte Funkzugangsnetz von einem Sender (502) an einen oder mehrere Knoten in einem oder mehreren der Vielzahl von Funkzugangsnetzen, um die Benutzereinrichtung an das ausgewählte Funkzugangsnetz anzuschließen.

6. Funkzugangsnetzknoten (412a) zum mindestens teilweisen Anschließen einer Benutzereinrichtung (402) an mindestens eines von einer Vielzahl von Funkzugangsnetzen (404a-d) in einem Telekommunikationssystem (400), wobei der Funkzugangsnetzknoten umfasst:
einen Empfänger (604), der dazu konfiguriert ist, Ladedaten in Bezug auf das mindestens eine von der Vielzahl von Funkzugangsnetzen für ein Abonnement eines Benutzers des Telekommunikationssystems (400) zu empfangen, wobei die Ladedaten eines oder mehrere der Folgenden umfassen: ein für das Benutzerabonnement zur Verfügung stehendes Kontingent auf einem oder mehreren der Vielzahl von Funkzugangsnetzen; Kosten pro Dateneinheit für das Benutzerabonnement auf einem oder mehreren der Vielzahl von Funkzugangsnetzen; eine maximale dem Benutzerabonnement zur Verfügung stehende Bitrate auf einem oder mehreren der Vielzahl von Funkzugangsnetzen;
dem Benutzerabonnement zur Verfügung stehendes Restguthaben auf einem oder mehreren der Vielzahl von Funkzugangsnetzen; und
Restzeit für das Benutzerabonnement auf einem oder mehreren der Vielzahl von Funkzugangsnetzen;
einen Funkzugangsnetzwähler (606), der mindestens teilweise dazu konfiguriert ist, mindestens eines der Vielzahl von Funkzugangsnetzen, mindestens teilweise basierend auf den Ladedaten, auszuwählen; und
einen Funkzugangsnetzsteckverbinder (608), der mindestens teilweise dazu konfiguriert ist, die Benutzereinrichtung an das ausgewählte Funkzugangsnetz anzuschließen.

7. Funkzugangsnetz- (412a) -Knoten nach Anspruch 6, ferner umfassend einen Abonnement-Amender (609), der dazu konfiguriert ist, Ladedaten in Bezug auf eines oder mehrere der Vielzahl von Funkzugangsnetzen (404a-d) zur Verkehrslenkung zu ergänzen, wobei die Ladedaten optional mindestens teilweise basierend auf Netzleistungspegeln und/oder der Netzbelastung ergänzt werden.

8. Funkzugangsnetzknoten (412a) nach Anspruch 6 oder Anspruch 7, wobei der Empfänger (602) dazu konfiguriert ist, Daten von der Benutzereinrichtung (402) über eine S14-Schnittstelle über die Zugangsnetzerkennungs- und -Auswahlfunktion (437) zu empfangen.

9. Verfahren zum Betreiben eines Funkzugangsnetzknotens (412a) zum mindestens teilweisen Anschließen einer Benutzereinrichtung (402) an mindestens eines von einer Vielzahl von Funkzugangsnetzen (404a-d) in einem Telekommunikationssystem (400), wobei das Verfahren umfasst:
Empfangen (1100) von Ladedaten in Bezug auf das mindestens eine von der Vielzahl von Funkzugangsnetzen für ein Abonnement eines Benutzers des Telekommunikationssystems (400) an einem Empfänger (602) des Funkzugangsnetzknotens, wobei die Ladedaten eines oder mehrere der Folgenden umfassen: ein für das Benutzerabonnement zur Verfügung stehendes Kontingent auf einem oder mehreren der Vielzahl von Funkzugangsnetzen; Kosten pro Dateneinheit für das Benutzerabonnement auf einem oder mehreren der Vielzahl von Funkzugangsnetzen; eine maximale dem Benutzerabonnement zur Verfügung stehende Bitrate auf einem oder mehreren der Vielzahl von Funkzugangsnetzen; dem Benutzerabonnement zur Verfügung stehendes Restguthaben auf einem oder mehreren der Vielzahl von Funkzugangsnetzen; und Restzeit für das Benutzerabonnement auf einem oder mehreren der Vielzahl von Funkzugangsnetzen;
mindestens teilweises Auswählen (1102), durch einen Funkzugangsnetzwähler (606) des Funkzugangsnetzknotens, mindestens eines der Vielzahl von Funkzugangsnetzen, wobei die Auswahl mindestens teilweise auf den empfangenen Ladedaten basiert; und
mindestens teilweises Anschließen (1104), durch einen Funkzugangsnetzsteckverbinder des Funkzugangsnetzknotens, der Benutzereinrichtung an das ausgewählte Funkzugangsnetz.

10. Telekommunikationssystem (400) zum Anschließen einer Benutzereinrichtung (402) an mindestens eines einer Vielzahl von Funkzugangsnetzen (404a-d) im Telekommunikationssystem (400), wobei das System umfasst:
einen Kernnetzknoten (700), umfassend einen Ladedaten-Retriever (706), der dazu konfiguriert ist, Ladedaten in Bezug auf das mindestens eine von der Vielzahl von Funkzugangsnetzen für ein Abonnement eines Benutzers des Telekommunikationssystems (400) abzurufen, und einen Sender (702), der dazu konfiguriert ist, die Ladedaten an einen Empfänger (502) der Benutzereinrichtung und/oder einen Empfänger (602) eines Funkzugangsnetzknotens (412a) von einem oder mehreren der Vielzahl von Funkzugangsnetzen zu übertragen, wobei die Ladedaten eines oder mehrere der Folgenden umfassen: ein für das Benutzerabonnement zur Verfügung stehendes Kontingent auf einem oder mehreren der Vielzahl von Funkzugangsnetzen; Kosten pro Dateneinheit für das Benutzerabonnement auf einem oder mehreren der Vielzahl von Funkzugangsnetzen; eine maximale dem Benutzerabonnement zur Verfügung stehende Bitrate auf einem oder mehreren der Vielzahl von Funkzugangsnetzen; dem Benutzerabonnement zur Verfügung stehendes Restguthaben auf einem oder mehreren der Vielzahl von Funkzugangsnetzen; und Restzeit für das Benutzerabonnement auf einem oder mehreren der Vielzahl von Funkzugangsnetzen,
wobei der Funkzugangsnetzknoten einen Funkzugangsnetzwähler (606) umfasst, der dazu konfiguriert ist, mindestens teilweise, mindestens eines von der Vielzahl von Funkzugangsnetzen auszuwählen, basierend mindestens teilweise auf einem oder mehreren der Folgenden: den vom Kernnetzknoten empfangenen Ladedaten; und von der Benutzereinrichtung empfangenen Auswahldaten, die sich auf eine Auswahl eines der Vielzahl von Funkzugangsnetzen durch die Benutzereinrichtung beziehen, und
wobei der Funkzugangsnetzknoten ferner einen Funkzugangsnetzsteckverbinder (608) umfasst, der dazu konfiguriert ist, mindestens teilweise, die Benutzereinrichtung an mindestens einen der Vielzahl von Funkzugangsknoten anzuschließen, wobei das Anschließen mindestens teilweise auf der durch den Funkzugangsnetzwähler des Funkzugangsnetzknotens ausgeführten Auswahl basiert.

11. Verfahren zum Betreiben eines Telekommunikationssystems (400) zum Anschließen einer Benutzereinrichtung (402) an mindestens eines von einer Vielzahl von Funkzugangsnetzen (404a-d) im Telekommunikationssystem (400), wobei das Verfahren umfasst:
Abrufen (1400) von Ladedaten in Bezug auf das mindestens eine von der Vielzahl von Funkzugangsnetzen für ein Abonnement eines Benutzers des Telekommunikationssystems (400) durch den Ladedaten-Retriever (706) eines Kernnetzknotens (700), wobei die Ladedaten eines oder mehrere der Folgenden umfassen: ein für das Benutzerabonnement zur Verfügung stehendes Kontingent auf einem oder mehreren der Vielzahl von Funkzugangsnetzen; Kosten pro Dateneinheit für das Benutzerabonnement auf einem oder mehreren der Vielzahl von Funkzugangsnetzen; eine maximale dem Benutzerabonnement zur Verfügung stehende Bitrate auf einem oder mehreren der Vielzahl von Funkzugangsnetzen; dem Benutzerabonnement zur Verfügung stehendes Restguthaben auf einem oder mehreren der Vielzahl von Funkzugangsnetzen; und
Restzeit für das Benutzerabonnement auf einem oder mehreren der Vielzahl von Funkzugangsnetzen;
Übertragen (1402), durch einen Sender (704) des Kernnetzknotens, der Ladedaten an eines oder mehrere der Benutzereinrichtungen und einen Funkzugangsnetzknoten (412a) des einen oder der mehreren der Vielzahl von Funkzugangsnetzen;
Auswählen (1410; 1414; 1420), mindestens teilweise, von mindestens einem von der Vielzahl von Funkzugangsnetzen, durch einen Funkzugangsnetzwähler (606) des Funkzugangsnetzknotens, basierend auf einem oder mehreren der Folgenden: den Ladedaten, die vom Kernnetzknoten empfangen wurden und Auswahldaten, die von der Benutzereinrichtung empfangen wurden und sich auf eine Auswahl von einem der Vielzahl von Funkzugangsnetzen durch die Benutzereinrichtung beziehen; und
Anschließen (1412) der Benutzereinrichtung an mindestens einen der Vielzahl von Funkzugangsknoten, wobei das Anschließen mindestens teilweise auf der Auswahl des Funkzugangsnetzknotens durch den Funkzugangsnetzwähler basiert.

12. Nichtflüchtiges computerlesbares Medium umfassend computerlesbaren Code, der bei Ausführung auf einer Benutzereinrichtung dazu konfiguriert ist, das Verfahren nach Anspruch 5 durchzuführen.

## Revendications

1. Équipement utilisateur (402) pour connexion à au moins l'un parmi une pluralité de réseaux d'accès radio (404a-d) dans un système de télécommunications (400), l'équipement utilisateur comprenant :
un récepteur (504) configuré pour recevoir des données d'imputation se rapportant à l'au moins un parmi la pluralité de réseaux d'accès radio pour un abonnement d'un utilisateur du système de télécommunications (400), dans lequel les données d'imputation comprennent un ou plusieurs parmi : un quota disponible pour l'abonnement d'utilisateur sur un ou plusieurs parmi la pluralité de réseaux d'accès radio ; un coût par unité de données pour l'abonnement d'utilisateur sur un ou plusieurs parmi la pluralité de réseaux d'accès radio ; un débit binaire maximal disponible pour l'abonnement d'utilisateur sur un ou plusieurs parmi la pluralité de réseaux d'accès radio ; un crédit restant disponible pour l'abonnement d'utilisateur sur un ou plusieurs parmi la pluralité de réseaux d'accès radio ; et un temps restant pour l'abonnement d'utilisateur sur un ou plusieurs parmi la pluralité de réseaux d'accès radio ;
un sélecteur de réseau d'accès radio (506) configuré pour sélectionner, sur la base au moins partiellement des données d'imputation, un ou plusieurs parmi la pluralité de réseaux d'accès radio ; et
un émetteur (502) configuré pour transmettre des données se rapportant au réseau d'accès radio sélectionné à un ou plusieurs noeuds dans un ou plusieurs parmi la pluralité de réseaux d'accès radio pour connecter l'équipement utilisateur au réseau d'accès radio sélectionné.

2. Équipement utilisateur (402) selon la revendication 1, dans lequel le sélecteur de réseau d'accès radio (506) est configuré pour sélectionner au moins l'un parmi la pluralité de réseaux d'accès radio (404a-d) sur la base de données d'imputation et comprend en outre une interface utilisateur (509) configurée pour présenter l'au moins un réseau d'accès radio sélectionné (404a-d) à un utilisateur, et pour recevoir une sélection par l'utilisateur acceptant ou rejetant l'au moins un réseau d'accès radio sélectionné, dans lequel facultativement l'interface utilisateur est configurée pour présenter les données d'imputation à l'utilisateur.

3. Équipement utilisateur (402) selon la revendication 2, dans lequel le récepteur (504) est configuré pour recevoir les données d'imputation pour l'abonnement d'un utilisateur depuis un noeud (412a) entreprenant au moins partiellement une fonction de découverte et de sélection de réseau d'accès (412) et facultativement, dans lequel le récepteur (504) est configuré pour recevoir les données d'imputation pour l'abonnement d'un utilisateur sur un ou plusieurs parmi : une interface S14 ; un plan utilisateur d'un ou plusieurs parmi la pluralité de réseaux d'accès radio (404a-d) ; et un plan de commande d'un ou plusieurs parmi la pluralité de réseaux d'accès radio.

4. Équipement utilisateur (402) selon une quelconque revendication précédente, dans lequel les données transmises par l'émetteur (502) comprennent des données de préférence d'utilisateur identifiant une pluralité de réseaux d'accès radio (404a-d) ou une ou plusieurs combinaisons de réseaux d'accès radio, ayant chacun une condition d'utilisation associée, dans lequel facultativement les données de préférence d'utilisateur comprennent des données se rapportant à une pluralité de réseaux d'accès radio ou à une ou plusieurs combinaisons de réseaux d'accès radio, et un ordre dans lequel chacun est préféré.

5. Procédé d'exploitation d'un équipement utilisateur (402) pour connexion à au moins l'un parmi une pluralité de réseaux d'accès radio (404a-d) dans un système de télécommunications (400), le procédé comprenant :
la réception (1000) de données d'imputation se rapportant à l'au moins un parmi la pluralité de réseaux d'accès radio pour un abonnement d'un utilisateur du système de télécommunications (400) au niveau d'un récepteur (504) de l'équipement utilisateur, dans lequel les données d'imputation comprennent un ou plusieurs parmi : un quota disponible pour l'abonnement d'utilisateur sur un ou plusieurs parmi la pluralité de réseaux d'accès radio ; un coût par unité de données pour la abonnement d'utilisateur sur un ou plusieurs parmi la pluralité de réseaux d'accès radio ; un débit binaire maximal disponible pour l'abonnement d'utilisateur sur un ou plusieurs parmi la pluralité de réseaux d'accès radio ;
un crédit restant disponible pour l'abonnement d'utilisateur sur un ou plusieurs parmi la pluralité de réseaux d'accès radio ; et un temps restant pour l'abonnement d'utilisateur sur un ou plusieurs parmi la pluralité de réseaux d'accès radio ;
la sélection (1002), par un sélecteur de réseau d'accès radio (506) de l'équipement utilisateur, de l'un parmi la pluralité de réseaux d'accès radio, sur la base au moins partiellement des données d'imputation ; et
la transmission (1004) de données se rapportant au réseau d'accès radio sélectionné depuis un émetteur (502) vers un ou plusieurs noeuds dans un ou plusieurs parmi la pluralité de réseaux d'accès radio pour connecter l'équipement utilisateur au réseau d'accès radio sélectionné.

6. Noeud de réseau d'accès radio (412a) pour connecter au moins partiellement un équipement utilisateur (402) à au moins l'un parmi une pluralité de réseaux d'accès radio (404a-d) dans un système de télécommunications (400), le noeud de réseau comprenant :
un récepteur (604) configuré pour recevoir des données d'imputation se rapportant à l'au moins un parmi la pluralité de réseaux d'accès radio pour un abonnement d'un utilisateur du système de télécommunications (400), dans lequel les données d'imputation comprennent un ou plusieurs parmi : un quota disponible pour l'abonnement d'utilisateur sur un ou plusieurs parmi la pluralité de réseaux d'accès radio ; un coût par unité de données pour l'abonnement d'utilisateur sur un ou plusieurs parmi la pluralité de réseaux d'accès radio ; un débit binaire maximal disponible pour l'abonnement d'utilisateur sur un ou plusieurs parmi la pluralité de réseaux d'accès radio ;
un crédit restant disponible pour l'abonnement d'utilisateur sur un ou plusieurs parmi la pluralité de réseaux d'accès radio ; et un temps restant pour l'abonnement d'utilisateur sur un ou plusieurs parmi la pluralité de réseaux d'accès radio ;
un sélecteur de réseau d'accès radio (606) configuré au moins partiellement pour sélectionner au moins l'un parmi la pluralité de réseaux d'accès radio, au moins partiellement sur la base des données d'imputation ; et
un connecteur de réseau d'accès radio (608) configuré au moins partiellement pour connecter l'équipement utilisateur au réseau d'accès radio sélectionné.

7. Noeud de réseau d'accès radio (412a) selon la revendication 6, comprenant en outre un modificateur d'abonnement (609) configuré pour modifier des données d'imputation se rapportant à un ou plusieurs parmi la pluralité de réseaux d'accès radio (404a-d) pour l'orientation de trafic, dans lequel facultativement, les données d'imputation sont modifiées au moins partiellement sur la base de niveaux de performance de réseau et/ou de la charge de réseau.

8. Noeud de réseau d'accès radio (412a) selon la revendication 6 ou la revendication 7, dans lequel le récepteur (602) est configuré pour recevoir des données depuis l'équipement utilisateur (402) sur une interface S14 via une fonction de découverte et de sélection de réseau d'accès (437).

9. Procédé d'exploitation d'un noeud de réseau d'accès radio (412a) pour connecter au moins partiellement un équipement utilisateur (402) à au moins l'un parmi une pluralité de réseaux d'accès radio (404a-d) dans un système de télécommunications (400), le procédé comprenant :
la réception (1100) de données d'imputation se rapportant à l'au moins un parmi la pluralité de réseaux d'accès radio pour un abonnement d'un utilisateur du système de télécommunications (400) au niveau d'un récepteur (602) du noeud de réseau d'accès radio, dans lequel les données d'imputation comprennent un ou plusieurs parmi : un quota disponible pour l'abonnement d'utilisateur sur un ou plusieurs parmi la pluralité de réseaux d'accès radio ; un coût par unité de données pour l'abonnement d'utilisateur sur un ou plusieurs parmi la pluralité de réseaux d'accès radio ; un débit binaire maximal disponible pour l'abonnement d'utilisateur sur un ou plusieurs parmi la pluralité de réseaux d'accès radio ; un crédit restant disponible pour l'abonnement d'utilisateur sur un ou plusieurs parmi la pluralité de réseaux d'accès radio ; et un temps restant pour l'abonnement d'utilisateur sur un ou plusieurs parmi la pluralité de réseaux d'accès radio ;
la sélection au moins partielle (1102), par un sélecteur de réseau d'accès radio (606) du noeud de réseau d'accès radio, d'au moins l'un parmi la pluralité de réseaux d'accès radio, la sélection étant sur la base au moins partiellement des données d'imputation reçues ; et
la connexion au moins partielle (1104), par un connecteur de réseau d'accès radio du noeud de réseau d'accès radio, de l'équipement utilisateur au réseau d'accès radio sélectionné.

10. Système de télécommunications (400) pour connecter un équipement utilisateur (402) à au moins l'un parmi une pluralité de réseaux d'accès radio (404a-d) dans le système de télécommunications (400), le système comprenant :
un noeud de réseau central (700) comprenant un récupérateur de données d'imputation (706) configuré pour récupérer des données d'imputation se rapportant à l'au moins un parmi la pluralité de réseaux d'accès radio pour un abonnement d'un utilisateur du système de télécommunications (400), et un émetteur (702) configuré pour transmettre les données d'imputation à un récepteur (502) de l'équipement utilisateur et/ou à un récepteur (602) d'un noeud de réseau d'accès radio (412a) d'un ou plusieurs parmi la pluralité de réseaux d'accès radio, dans lequel les données d'imputation comprennent un ou plusieurs parmi : un quota disponible pour l'abonnement d'utilisateur sur un ou plusieurs parmi la pluralité de réseaux d'accès radio ; un coût par unité de données pour l'abonnement d'utilisateur sur un ou plusieurs parmi la pluralité de réseaux d'accès radio ; un débit binaire maximal disponible pour l'abonnement d'utilisateur sur un ou plusieurs parmi la pluralité de réseaux d'accès radio ; un crédit restant disponible pour l'abonnement d'utilisateur sur un ou plusieurs parmi la pluralité de réseaux d'accès radio ; et un temps restant pour l'abonnement d'utilisateur sur un ou plusieurs parmi la pluralité de réseaux d'accès radio,
dans lequel le noeud de réseau d'accès radio comprend un sélecteur de réseau d'accès radio (606) configuré, au moins partiellement, pour sélectionner au moins l'un parmi la pluralité de réseaux d'accès radio, sur la base au moins partiellement d'un ou plusieurs parmi : les données d'imputation reçues du noeud de réseau central ; et des données de sélection reçues de l'équipement utilisateur et se rapportant à une sélection de l'un parmi la pluralité de réseaux d'accès radio par l'équipement utilisateur, et
et dans lequel le noeud de réseau d'accès radio comprend en outre un connecteur de réseau d'accès radio (608) configuré pour connecter, au moins partiellement, l'équipement utilisateur à au moins l'un parmi la pluralité de noeud d'accès radio, la connexion étant basée au moins partiellement sur la sélection réalisée par le sélecteur de réseau d'accès radio du noeud de réseau d'accès radio.

11. Procédé d'exploitation d'un système de télécommunications (400) pour connecter un équipement utilisateur (402) à au moins l'un parmi une pluralité de réseaux d'accès radio (404a-d) dans le système de télécommunications (400), le procédé comprenant :
la récupération (1400) de données d'imputation se rapportant à l'au moins un parmi la pluralité de réseaux d'accès radio pour un abonnement d'un utilisateur du système de télécommunications (400), par un récupérateur de données d'imputation (706) d'un noeud de réseau central (700), dans lequel les données d'imputation comprennent un ou plusieurs parmi : un quota disponible pour l'abonnement d'utilisateur sur un ou plusieurs parmi la pluralité de réseaux d'accès radio ; un coût par unité de données pour l'abonnement d'utilisateur sur un ou plusieurs parmi la pluralité de réseaux d'accès radio ; un débit binaire maximal disponible pour l'abonnement d'utilisateur sur un ou plusieurs parmi la pluralité de réseaux d'accès radio ; un crédit restant disponible pour l'abonnement d'utilisateur sur un ou plusieurs parmi la pluralité de réseaux d'accès radio ; et un temps restant pour l'abonnement d'utilisateur sur un ou plusieurs parmi la pluralité de réseaux d'accès radio ;
la transmission (1402), par un émetteur (704) du noeud de réseau central, des données d'imputation à un ou plusieurs parmi l'équipement utilisateur et un noeud de réseau d'accès radio (412a) de celui ou ceux parmi la pluralité de réseaux d'accès radio ;
la sélection (1410 ; 1414 ; 1420), au moins partielle, d'au moins l'un parmi la pluralité de réseaux d'accès radio, par un sélecteur de réseau d'accès radio (606) du noeud de réseau d'accès radio, sur la base d'un ou plusieurs parmi : les données d'imputation reçues du noeud de réseau central et des données de sélection reçues de l'équipement utilisateur et se rapportant à une sélection de l'un parmi la pluralité de réseaux d'accès radio par l'équipement utilisateur ; et
la connexion (1412) de l'équipement utilisateur à au moins l'un parmi la pluralité de noeuds d'accès radio, la connexion étant basée au moins partiellement sur la sélection réalisée par le sélecteur de réseau d'accès radio du noeud de réseau d'accès radio.

12. Support non transitoire lisible par un ordinateur comprenant un code lisible par un ordinateur configuré, lorsqu'il est exécuté sur un équipement utilisateur, pour effectuer le procédé selon la revendication 5.
